# EUROPÄISCHE PATENTSCHRIFT

(11) **EP 3 256 746 B1**
(45) Veröffentlichungstag und Bekanntmachung des Hinweises auf die Patenterteilung: **06.06.2018**
(21) Anmeldenummer: 16726023.1
(22) Anmeldetag: 11.05.2016
(51) Int. Cl.: F16B 15/08

(54) **NAGELSTREIFEN AUS VERHOLZTEM PFLANZENMATERIAL**
NAIL STRIP CONSISTING OF WOODY PLANT MATERIAL
BANDE DE CLOUS EN MATIÈRE VÉGÉTALE LIGNEUSE

(30) Priorität: 11.05.2015 DE 102015107371
(43) Veröffentlichungstag der Anmeldung: 20.12.2017
(73) Patentinhaber: Raimund Beck KG, 5270 Mauerkirchen (AT)
(72) Erfinder: SIEMERS, Stefan, 84489 Burghausen (DE); KORTE, Hans, 23966 Wismar (DE)
(74) Vertreter: Albrecht, Ralf
(86) Internationale Anmeldenummer: PCT/EP2016/060603
(87) Internationale Veröffentlichungsnummer: WO 2016/180900

(56) Entgegenhaltungen:
- US-A1- 2006 060 263

## Beschreibung

Die vorliegende Erfindung betrifft einen Nagelstreifen für ein Nagelsetzgerät mit mehreren miteinander verbundenen Nägeln zum Verbinden von wenigstens zwei Bauteilen, die jeweils einen Nagelschaft und eine daran endseitig vorgesehene Nagelspitze aufweisen. Desweiteren betrifft die Erfindung ein Verfahren zur Herstellung eines solchen Nagelstreifens sowie ein Verfahren zum Verbinden von zwei Bauteilen mittels eines solchen Nagelstreifens.
Nägel gehören zu den ältesten bekannten Verbindungsmitteln in der Konstruktionstechnik, wie Hausbau, Schiffbau, Rüstungstechnik etc., meist in Zusammenhang mit dem Werkstoff Holz. Zu unterscheiden ist schon früh zwischen steifen und harten Nägeln aus Metall, zumeist Eisen/Stahl, die direkt mittels Hämmern ins Holz eingeschlagen werden und Holznägeln, die eine Bohrung benötigen, um zwei oder mehrere Bauteile aus Holz oder andere Materialien, wie z.B. Leder miteinander zu verbinden. Ohne Bohrung werden beim Aufschlag des Hammers die Holzstrukturen gequetscht und/oder die Holznägel brechen und/oder splittern.
Traditionell werden Nägel mit Hämmern in den zu nagelnden Werkstoff eingetrieben. In der Regel sind dazu mehrere Hammerschläge nötig, wobei die Gefahr des Verbiegens des Nagels besteht, wenn der Nagelkopf nicht in der Verlängerung des Nagelschafts getroffen wird.
Da mit zunehmender Industrialisierung die Produktionsgeschwindigkeit aus ökonomischen Gründen immer wichtiger wird, wurden Werkzeuge entwickelt, mit denen Nägel schneller in die zu verbindenden Bauteile eingetrieben werden können als mit einem handgeführten Hammer. Hierzu zählen vor allem Nagelsetzgeräte, die mit unterschiedlichen Antriebskonzepten ausgerüstet sein können, wobei Druckluft eine herausragende Stellung einnimmt. Druckluftnagler werden üblicherweise mit Drücken von 5 - 6 bar betrieben. Die Eintreibgeschwindigkeit liegt im Durchschnitt bei ca. 46 m/s (http://blogs.cdc.gov/niosh-service-blog/2013/07/16/nail.gun-comic/). Alternativ können Nägel auch mit Treibladungen eingetrieben werden. Die Geschwindigkeiten sind dabei von 96 m/s bis 395 m/s einstellbar (http://en/wikipedia/org/wiki/Powder-actuated_tool).

Um die Verarbeitungsgeschwindigkeiten zu steigern, werden Nägel zu steifen oder flexiblen Nagelstreifen verbunden, die beim Nagelsetzen automatisch für das Nachladen eines neuen Nagels im Nagelsetzgerät genutzt werden. Stahlnägel haben neben vielen Vorteilen auch einige Nachteile. Trotz Korrosionsschutzmaßnahmen, wie Verzinken, neigen Stahlnägel unter ungünstigen Bedingungen zum Rosten. Insbesondere dann, wenn in dem genagelten Werkstoff saure Bedingungen herrschen. Dies gilt insbesondere für gerbstoffreiche Hölzer (Laubhölzer wie Eiche, Bangkirai oder Nadelhölzer wie Kiefer, Douglasie, Lärche, etc.), die wegen ihrer Dauerhaftigkeit im Außenbereich, z.B. bei Fassaden oder Terrassen eingesetzt werden. Bei Bewitterung entstehen unerwünschte, dunkle bis schwarze Verfärbungen, z.B. Tropfnasen bei Fassaden an den Nagelstellen. Eine Abhilfe durch Verwendung rostfreier Stahlsorten ist möglich aber sehr kostenaufwendig.

Ein weiterer Nachteil von Stahlnägeln liegt beim Recycling. Genageltes Holz wird üblicherweise nicht mit holzbearbeitenden Werkzeugen bearbeitet, weil Werkzeugschneiden beim Aufeinandertreffen mit Stahlnägeln sehr schnell abstumpfen oder ggf. zerstört werden. Holzbauteile, die Stahlnägel enthalten, werden deshalb zumeist mit Brechern zu Partikeln zerkleinert und mittels Magneten von den Stahl- und Eisenbestandteilen gesäubert, um für die Herstellung von Spanplatten oder energetisch genutzt zu werden.

In einigen Anwendungen ist auch die Wechselwirkung von Eisen oder Metallen mit elektromagnetischen Wellen unerwünscht. So können metallhaltige Bauteile nicht mit hochfrequenten elektromagnetischen Wellen, z.B. mit Mikrowellen behandelt werden. Metallfreie Nägel, die keine Verfärbungen insbesondere bei der Bewitterung verursachen, von Holzbearbeitungsmaschinen ohne Schaden an den Werkzeugen bearbeitet werden können und elektromagnetisch verträglich sind, weisen daher ein interessantes Marktpotential auf. Neben Fassadenanwendungen können z.B. temporäre Konstruktionen wie Bauzäune, Schalungen etc. oder Verpackungen mit metallfreien Nägeln verbunden und nach ihrer Nutzung durch spanende Werkzeuge (z.B. Sägen) in ihre Bestandteile zur stofflichen Weiterverarbeitung zerlegt werden. In diesem Zusammenhang ist aus der JP9043171 und der US5547325A bekannt, Nägel aus verstärktem Kunststoff oder glasfaserverstärkten Hochleistungskunststoffen einzusetzen.

Die Verwendung von verstärkten, insbesondere glasfaserverstärkten (Hochleistungs-) Kunststoffen kann jedoch auch Nachteile mit sich bringen. So sind Glasfasern abrasiv und stumpfen Schneiden holzbearbeitender Werkzeuge ab. Ferner ist die Herstellung von Glasfasern und (Hochleistungs-) Kunststoffen energetisch aufwendig und daher im Sinne des Umweltschutzes "unfreundlich". Da Hochleistungskunststoffe bislang nur aus fossilen Rohstoffen gewonnen werden können, ist ihr "Carbon Footprint" auch in diesem Aspekt hoch und damit aus Umweltsicht negativ zu bewerten. Zudem sind Hochleistungskunststoffe im Vergleich zu Massenkunststoffen sehr teuer.

Zudem sind aus der US 2006/0060263 A1 aus Holz oder einem Bambusmaterial oder einem Palmmaterial hergestellte Nägel bekannt.

Der Erfindung liegt daher die Aufgabe zugrunde, einen Nagelstreifen zu schaffen, durch den sich insbesondere aus Holz bestehende Bauteile verbinden lassen, ohne dass die Gefahr von bewitterungsbedingten Verfärbungen entsteht, und die Bauteile auch ohne Zerkleinerung oder aufwendige Entfernung der Nägel recycelt werden können. Desweiteren sollen Verfahren zur Herstellung eines solchen Nagelstreifens und zum Verbinden von zwei Bauteilen mittels eines solchen Nagelstreifens angegeben werden.

Diese Aufgabe ist bei einem Nagelstreifen der eingangs genannten Art dadurch gelöst, dass die Nägel aus Holz und/oder Holzwerkstoffen und/oder Bambus oder Palmengewebe enthaltenden Werkstoffen mit einer Dichte größer 0,65 g/cm³ bestehen und mit durchtrennbaren Verbindungsmittel verbunden sind, die beim Nagelsetzen automatisch abgeschert werden, dass die Nagelspitze als kegelförmige Rundspitze ausgebildet ist, und dass das Verhältnis der Länge der Nagelspitze zur kleinsten Dicke des Nagelschafts zwischen 1,5 und 3, insbesondere zwischen 1,5 und 2,5 und bevorzugt zwischen 1,8 und 2,1 liegt.

Überraschenderweise hat sich gezeigt, dass die erfindungsgemäß ausgebildeten Nägel, die aus harten Hölzern oder Holzwerkstoffen oder den Holzwerkstoffen strukturell ähnlichen Werkstoffen bestehen und eine definierte Rundspitze besitzen, mittels Nagelsetzgeräten ohne Vorbohrung genagelt werden können, ohne dass die Nägel brechen, bersten oder verbiegen.

Zu den harten Hölzern gehören Laubhölzer mit Dichten ab 0,65 g/cm³, wie z.B. Rotbuche (Fagus sylvatica), Hainbuche (Carpinus betulus), Ahorn (Acer pseudoplatanus oder A. platanoides), bevorzugt Laubhölzer mit Dichten größer 0,85 g/cm³, wie z.B. Pockholz (Guaiacum ssp.), Pernambuc (Caesalpinia echinata), Bangkirai (Shorea ssp.) oder einige Palisanderarten (Dalbergia ssp, Machaerium ssp), besonders bevorzugt Laubhölzer mit Dichten größer 1,0 g/cm³, wie z.B. Bongossi (Lophira alata).

Zu geeigneten Holzwerkstoffen, die ohne Zusatz von Bindemitteln hergestellt werden, gehören verdichtete Hölzer mit Dichten größer 0,65 g/cm³, insbesondere mit Dichten größer 0,85 g/cm³ und bevorzugt mit Dichten größer 1,0 g/cm³. Diese können beispielsweise nach der WO94/20273 A hergestellt werden.

Zu geeigneten Holzwerkstoffen, die unter Zusatz von Bindemitteln hergestellt werden, gehören nicht verdichtete Furnierschichthölzer und Sperrhölzer aus Holzarten ausreichender Dichte (s.o). Zu den kommerziell erhältlichen Furnierschichthölzern ausreichender Dichte gehört z.B. BauBuche von Pollmeier Massivholz GmbH & Co.KG, Creuzburg, mit einer Dichte von 0,68 g/cm³. Sperrhölzer mit gleich starken Furnierlagen, sogenannte Multiplexplatten, werden aus Buche oder Birke mit Dichten von ≥ 0,7 g/cm³ von verschiedenen Herstellern, wie z.B. UPM Plywood, Lahti, Finnland, angeboten. Zu den bevorzugten Holzwerkstoffen mit Bindemittelanteilen gehören verdichtete Furnierschichthölzer, Presslagenholz und Sperrhölzer, z.B. aus Buchenfurnier mittlerer bis hoher Verdichtung mit Dichten von 1,1 g/cm³ bis 1,4 g/cm³, wie z.B. Kunstharzpressholz nach DIN 7707.

Den Holzwerkstoffen strukturell sehr ähnlich sind verdichtete und verleimte Werkstoffe aus verholztem Pflanzenmaterial, z.B. aus Monokotylidonen, zu denen u.a. Gewebe aus Palmen- und Bambusgewächsen gehören. Verdichtete Bambusprodukte werden unter anderem unter der Bezeichnung CoBAM (compressed Bamboo) geführt. CoBAM weist Dichten von 0,95 bis 1,25 g/cm³ auf.

Holznägel besitzen gegenüber Metallnägeln und Kunststoffnägeln besondere Eigenschaften. Zunächst können sie aus dem gleichen Material wie das Bauteil in das sie genagelt werden, hergestellt werden. Z.B. können durch Verdichten von Kiefern- oder Lärchenholz auf eine Dichte größer 0,8 g/m³ Holznägel hergestellt werden, mit denen Kiefern- oder Lärchenholzfassadenbretter auf eine Nadelholzunterkonstruktion genagelt werden können. Durch die Materialgleichheit erhält man ein besonders homogenes und natürlich erscheinendes Aussehen. Der Nagel ähnelt dann eher einem Ast als einem Fremdkörper aus Metall. Bei der Alterung des Holzes dunkelt Holz durch UV-Strahlung nach, bei freier Bewitterung, z.B. von Holzfassaden, vergraut Holz. Im Gegensatz zu Metall- und speziell zu Stahlnägeln verhalten sich Holznägel farblich wie ihr Untergrund. Unerwünschte Farbreaktionen zwischen Eisen und Gerbstoffen, die zu schwarzen Verfärbungen des Holzes führen, kommen nicht vor.

Holznägel in Holz stören auch nicht bei der Bearbeitung mit Werkzeugen. Der Verbund aus Holznägeln und Bauteil kann deshalb hervorragend stofflich wiederverwendet werden. Auch bei einer energetischen Nutzung entfällt die Abtrennung von Kontaminationen mit metallischen Werkstoffen, wodurch Kosten gespart werden.

Ferner sind Holznägel im Gegensatz zu Metall- und Kunststoffnägeln hygroskopisch und können quellen. Insbesondere verdichtetes Holz kann sehr hohe Quelldrücke von bis zu 10 N/mm² ausbilden. Diese Eigenschaft ist von besonderer Bedeutung. Um die Auszugfestigkeit zu erhöhen, werden Holznägel vor der Nutzung auf Holzfeuchtigkeiten getrocknet, die unterhalb der Feuchtigkeit der zu nagelnden Bauteile liegt. Im Freien verbautes oder zu verbauendes Bauholz weist z.B. Feuchtigkeiten > 15% auf. Holznägel sollten deshalb auf mindestens 5%, bevorzugt 10% und besonders bevorzugt auf 15% geringere Holzfeuchtigkeit als die, der zu nagelnden Bauteile getrocknet werden. Nach dem Eindringen des Nagels nimmt der Nagel aus der Umgebung Feuchtigkeit auf, bis er seine Ausgleichsfeuchtigkeit erreicht hat, und quillt dabei. Durch die Quellung presst sich der Nagel stärker an das Umgebungsmaterial, wodurch die Reibung und die Auszugfestigkeit erhöht werden.

Wesentlich ist, dass die erfindungsgemäßen Nägel eine kegelförmige Rundspitze, d.h. eine Spitze mit einem kreisförmigen Querschnitt, besitzen, deren Länge wenigstens anderthalbmal so groß ist wie die kleinste Dicke des Nagelschafts. Bei einem kreisrunden Schaft entspricht diese kleinste Dicke dem Durchmesser, bei einem ovalen Schaft entspricht sie dem kleineren Durchmesser und bei einem mehreckigen Querschnitt entspricht sie dem kleinsten Abstand zwischen zwei einander bezüglich der Schaftachse gegenüberliegenden Punkten. Versuche haben gezeigt, dass bei in Holzbauteile eingeschossenen Nägel mit einer Rundspitze gemäß der vorliegenden Erfindung eine enge Anlage zwischen dem Nagel und der Holzmatrix des Bauteils vorhanden ist. Es sind nur sehr wenige und geringe Ausbrüche in der Holzmatrix zu erkennen. Bei Nägeln mit Teil- oder Pyramidenspitze sind hingegen deutliche und zahlreiche Ausbrüche an der Kontaktstelle zwischen Nagel und Matrix erkennbar. Zudem sind im Bereich des Einschusskanals stark in Schutzrichtung abgewinkelte Jahresringsstrukturen erkennbar.

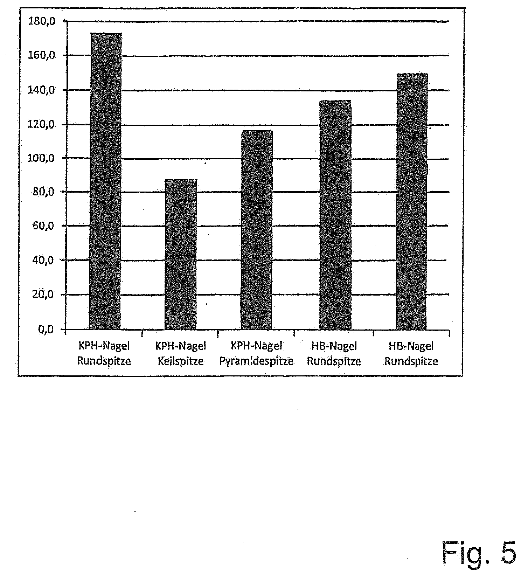

Ferner ist mit den erfindungsgemäßen Nägeln, die mit einer Rundspitze versehen sind, hohe Ausziehfestigkeitswerte zu erzielen. Bei einem Versuch wurden Kunstharzpressholznägel (KPH-Nägel) mit einer Rund-, Keil- und Pyramidenspitze mit einer Dichte von 1,65 g/cm³ sowie Vollholznägel aus Hainbuche mit einer Dichte von 0,8 g/cm³, die mit einer korrespondierenden Rundspitze versehen waren, 41 mm tief radial in Fichte eingeschossen. Anschließend wurde die Ausziehfestigkeit ermittelt. Die Ergebnisse sind in der Figur 5 dargestellt. Dieser ist zu entnehmen, dass die KPH-Nägel mit Rundspitze mit einem Mittelwert von 173,5 kp und Spitzenwerten von 199 kp die höchste Auszugskraft erzielten, gefolgt von Vollholznägeln aus Hainbuche (HB-Nägel) mit 149,9 kp (wenn man die abgebrochenen Nägel unberücksichtigt lässt) und einem Spitzenwert von 179 kp. KPH-Nägel mit Pyramidenspitze erreichten dagegen im Mittel nur 116,7 kp, was 67% des Mittelwerts der KPH-Nägel mit Rundspitze entspricht. KPH-Nägel mit Keilspitze erzielten im Mittel nur 87,9 kp, was bezogen auf KPH-Nägel mit Rundspitze 50,7% entspricht.

Erfindungsgemäß ist erkannt worden, dass die Geometrie der Nagelspitze einen erheblichen Einfluss auf die Struktur des Einschusskanals im Übergang vom Nagel zur Matrix hat. Es hat sich gezeigt, dass bei der Verwendung von Rundspitzen, deren Länge im Bereich von 1,5- bis dreifachen der kleinsten Schaftdicke entspricht, Faserausbrüche entlang des Einschusskanals der Nägel weitgehend vermieden werden können und die Holzmatrix eng am Nagel anliegt. Ferner verdichten eingeschossene Nägel gemäß der vorliegenden Erfindung die Zellstruktur entlang des Einschusskanals und biegen sie in Schussrichtung ab.

Erfindungsgemäß werden zwei Bauteile miteinander verbunden, indem die erfindungsgemäß ausgebildeten Nägel mittels eines Nagelsetzgerätes in die Bauteile eingeschossen werden. Dabei werden die einzelnen Nägel mittels des Nagelsetzgerätes in die zu verbindenden Bauteile in einem einzigen Zug mit einer Geschwindigkeit von wenigstens 20 m/s, insbesondere mindestens 25 m/s und bevorzugt mehr als 30 m/s eingeschossen. Beim Einschießen des Nagels in den Untergrund wird durch die hohen Einschussgeschwindigkeiten von pneumatischen Nagelsetzgeräten, die in der Regel über 20 m/s betragen und häufig sogar mehr als 40 m/s erreichen, eine hohe Reibung zwischen der Oberfläche des Nagels und dem verdrängten Untergrundmaterial erzeugt. Durch die Reibung wird Reibungshitze erzeugt. Da Holz ein schlechter Wärmeleiter ist (Wärmeleitzahl Holz ca. 0,1 bis 0,2 W/mK, Stahl ca. 40 - 50 W/mK), werden dabei die Oberflächen des Nagels sowie des Schusskanals im umgebenden Material so stark erhitzt, dass es zu einem Verschweißen beider Materialien kommt. Dieser Schweißeffekt ist in ähnlicher Weise bereits in DE19620273 A beschrieben. Im Gegensatz zu der DE 19620273 A wird beim Reibschweißen des Nagels, der eine reibende Relativbewegung gegenüber dem Umgebungsmaterial durchführt, jedoch kein zusätzlicher Stauchdruck angewandt, mit dem die Werkstücke aneinander gepresst werden.

Durch die Kombination von Reibschweißen und Quellen ist die Haftung des Holznagels im (Holz-) Untergrund so hoch, dass auf die Ausbildung eines über den Schaftdurchmesser hinausragenden Nagelkopfs, wie er für Metallnägel typisch ist, verzichtet werden kann. Dies ist aus ästhetischen Gründen sehr willkommen, weil dadurch der sichtbare Nageldurchmesser kleiner wird und die Struktur der Oberfläche weniger gestört wird.

In bevorzugter Weise besitzen die Nägel eine Auszugfestigkeit von mindestens 80 kp (1 kilopond [kp] entspricht 9.8 Newton [N]), bevorzugt mindestens 90 kp und besonders bevorzugt mindestens 100 kp beträgt. Alternativ oder zusätzlich können die Nägel mit einer füllkörperhaltigen Polymerschicht zumindest teilweise ummantelt sein und eine Auszugfestigkeit von mindestens 90 kp, bevorzugt mindestens 100 kp und besonders bevorzugt mindestens 110 kp aufweisen.

In bevorzugter Weise bestehen die Nägel und Verbindungsmittel aus dem gleichen Material, auch wenn sie alternativ auch aus verschiedenen Materialien bestehen können.

Der Nagelschaft kann prinzipiell einen beliebigen Querschnitt besitzen. Beispielsweise kann er oval oder mehreckig ausgebildet sein. In bevorzugter Weise besitzt der Nagelschaft jedoch einen kreisrunden Durchmesser. Bevorzugt liegt der Durchmesser des Nagelschafts bzw. die kleinste Nageldicke bei einem ovalen oder mehreckigen zwischen 2 mm und 8 mm, insbesondere zwischen 3,5 und 6 mm und bevorzugt zwischen 4 und 5 mm.

Gemäß einer Weiterbildung der Erfindung ist vorgesehen, dass die Nägel einen Nagelkopf in der Form einer halblinsenförmigen Kalotte aufweisen, der bezüglich der Schaftachse radial über den Schaft nach außen vorsteht. In bevorzugter Weise ist der Nagelschaft jedoch an seinem der Nagelspitze gegenüberliegenden Ende glatt unter einem Winkel von 90° zur Schaftachse abgeschnitten ausgeführt.

Die Nagellänge (Kopf + Schaft + Spitze) variiert dabei zwischen 20 mm und 90 mm, insbesondere zwischen 30 mm und 70 mm, bevorzugt zwischen 40 mm und 60 mm.

Das Verhältnis der axialen Nagellänge zur kleinsten Schaftdicke bei mehrkantigen Querschnitten liegt bei einer Ausführungsform der Erfindung zwischen 5 und 25, insbesondere zwischen 9 und 20 und bevorzugt zwischen 12 und 16.

Die Nägel werden entweder einzeln oder als Nagelstreifen aus einer Reihe parallel angeordneter Nägel hergestellt, die durch ein Verbindungsmittel mit einander verbunden sind. Dabei können sie aus Vollmaterial mit spanabhebenden Werkzeugen durch Stanzen, durch Schneiden mittels elektromagnetischer Wellen, insbesondere durch Laserschneiden, oder durch Strahlschneiden, insbesondere mittels Wasserstrahl oder partikelgefülltem Gasstrahl, bevorzugt durch Sandstrahlen oder durch eine Kombination solcher Verfahren hergestellt werden.

Die Nagelstreifen können nach unterschiedlichen Ausgestaltungen unterschieden werden, z.B. in Streifen, bei denen Nägel und abscherbare Verbindungsmittel aus dem gleichen Material oder aus verschiedenen Materialien bestehen, Streifen aus nachträglich verbundenen Einzelnägeln, Streifen aus zusammengesetzten und durch abscherbare Verbindungsmittel verbundene Halbnägeln, Streifen aus Nägeln, die durch Formpressen hergestellt werden und miteinander durch abscherbare Verbindungsmittel verbunden sind, und Streifen aus Nägeln, die durch Formpressen miteinander verbunden sind.

Nagelstreifen sind charakterisiert durch die Anordnung der Einzelnägel. Die Breite des Verbindungsmittels zwischen zwei Nägeln ist definiert durch den Abstand zwischen zwei Nägeln. Die Streifenbreite ergibt sich aus der Summe der Produkte aus der Anzahl Nägel multipliziert mit dem Durchmesser und Anzahl Nägel minus eins multipliziert mit dem Abstand zwischen zwei Nägeln. Die Spitzen der parallel angeordneten Nägel befinden sich auf einer Geraden, die entweder rechtwinklig zur Nagelausrichtung oder in einem von der Rechtwinkligkeit abweichenden Winkel α verläuft.

Streifen aus gleichem Material wie z.B. aus Vollholz oder Holzwerkstoffen oder CoBAM werden in einem ersten Schritt durch spanabhebende Verfahren (Hobeln oder Fräsen) zu einem "Riffelbrett" geformt, das auf beiden Seiten genau gegenüberliegende Halbstäbe aufweist, die seitlich durch einen schmalen Steg verbunden sind. In einem zweiten Schritt wird das "Riffelbrett" quer, ggf. treppenförmig, mit einem vorgegeben Winkel α, zu Streifen parallel liegender Stäbe geschnitten, deren Länge der vorgesehenen Nagellänge entspricht. Um die Länge der Verbindungsmittel zwischen den Nägeln zu kürzen und damit die Abscherbarkeit zu erhöhen, werden in die Stege Ausnehmungen mit traditionellen spanabhebenden Verfahren wie Sägen, Bohren, Fräsen oder Schleifen, durch Stanzen oder mit Verfahren wie Schneiden mit elektromagnetischen Wellen (Laser) oder Strahlschneiden (Wasserstrahl, partikelgefüllter Gasstrahl (z.B. Sandstrahl)) geschnitten, so dass anstelle der vollständig durchgehenden nur noch schmale Verbindungselemente übrigbleiben, die die Stäbe miteinander verbinden. Um aus den Stäben Nägel herzustellen, werden die Stäbe an einer Seite angespitzt. Die Köpfe werden, falls noch nicht beim Schneiden der Streifen erfolgt, spanabhebend, stanzend, per Laserstrahl oder Strahlschneider, rechtwinklig eben zur Stabachse oder kalottenförmig ausgebildet.

Die Länge der Verbindungsmittel, die in Achsenrichtung der Nägel gemessen wird, beträgt in der Summe der Einzellängen eines oder mehrerer Verbindungsmittel zwischen zwei Nägeln, weniger als die Hälfte, bevorzugt weniger als ein Drittel und besonders bevorzugt weniger als ein Viertel der Nagellänge.

Zur Herstellung von Nagelstreifen aus nachträglich verbundenen Einzelnägeln werden diese in der gewünschten Anordnung, entweder rechtwinklig zur Nagelachse oder um einen Winkel α davon abweichend, nebeneinander gelegt und mit Verbindungsmitteln miteinander verbunden. Diese Verbindungsmittel befinden sich entweder nur zwischen den einzelnen Nägeln, ohne Kontakt zum nächsten Verbindungsmittel aufzuweisen. Diese Ausformung kann z.B. mit Klebstofftropfen hergestellt werden. Alternativ können die Verbindungsmittel durchgehend miteinander verbunden sein. Die Verbindungsmittel können beispielsweise in Form eines oder mehrerer abscherbaren Streifen oder Fäden, aus Papier, Kunststofffolie, Kunststoffschmelzestreifen etc., die sich quer über die einzelnen Nägel legen und die Abstände zwischen den Nägeln überbrücken, vorliegen. Dabei können die Streifen an jedem einzelnen Nagel z.B. mit Klebstoff oder durch Anschmelzen befestigt sein. Im Falle von Kunststoffschmelzestreifen ist der Nagelstreifen erst einsatzfähig, wenn die Schmelze erstarrt ist. Die Verbindungsmittel können in einer weiteren Ausführungsform der Erfindung in Form eines abscherbaren Streifens, Fadens oder Drahtes geeigneter Festigkeit und Sprödigkeit, z.B. aus Hartweizengries ausgebildet sein, der durch Bohrungen oder Schlitz, in den Nägeln geführt und dabei mit jedem einzelnen Nagel durch geeignete Maßnahmen fixiert, beispielsweise festgeklebt wird.

Nagelstreifen können auch aus Halbnägeln und Verbindungsmitteln zusammengesetzt werden, wobei Halbnägel solche sind, die der Länge nach nur eine Hälfte eines Nagels repräsentieren. Halbnägel werden in einem ersten Arbeitsschritt wie bei den Streifen nachträglich verbundener Einzelnägel, rechtwinklig zur Nagelachse oder treppenförmig in einem Winkel α ausgerichtet und mit einem oder mehreren Verbindungsmitteln auf der Trennfläche zum ergänzenden Halbnagel miteinander verbunden, wobei die Verbindungsmittel an jedem einzelnen Halbnagel fixiert sind. Die ergänzenden Halbnägel werden anschließend auf die treppenförmig ausliegenden Halbnägel passgenau aufgebracht und mit diesen und den Verbindungsmitteln zu miteinander verbundenen Vollnägeln fixiert.

Eine weitere Möglichkeit der Nagelstreifenherstellung besteht durch Formpressen von Spänen zu Nägeln, die miteinander durch Verbindungsmittel verbundenen sind. Dabei wird eine durch Pressdruck formbare Masse, beispielsweise aus Holzspänen, Bambusspänen oder allgemein verholzten Pflanzensubstanzen, die mit duroplastischen oder thermoplastischen Harzen umgeben sind, in ein Werkzeug eingebracht, das aus einer Unterwerkzeughälfte und einer oder mehreren Oberwerkzeughälften besteht. Im geschlossenen Zustand umhüllen die Unter- und Oberwerkzeughälften eine Kavität, die der geometrischen Anordnung und dem Volumen eines herzustellenden Nagelstreifens entspricht. Die Füllmenge der formbaren Masse wird so bemessen, dass in einem ersten Arbeitsschritt nur alle unteren Hälften der treppenförmigen Nagelreihe ausgebildet werden. An dafür vorgesehenen Aussparungen werden Verbindungsmittel, wie z.B. Papierstreifen quer zur Längsausrichtung der Nägel auf die Halbnägel aufgelegt. In einem zweiten Arbeitsschritt wird weitere formbare Masse zudosiert und mit einer Oberwerkzeughälfte zur vollständigen Nagelgeometrie verpresst. Das Verpressen kann bei kaltabbindenden Harzen bei Raumtemperatur erfolgen. Bei heißabbindenden Harzen oder bei thermoplastischen Harzen werden die Werkzeughälften auf die erforderliche Temperatur erhitzt und anschließend zum Ausformen wieder auf Raumtemperatur abgekühlt.
Bei der Nagelstreifenherstellung durch Formpressen kann auch auf separate Verbindungsmittel verzichtet werden, wenn die Kavitäten der Werkzeuge Verbindungsstege zwischen den Nagelkavitäten aufweisen, die beim Pressen von der formbaren Masse oder Bestandteilen der formbaren Masse, wie z.B. Binderharz, ausgefüllt werden.
Eine weitere Möglichkeit der Nagelstreifenherstellung besteht durch Stanzformpressen von verdichtbarem Vollholz oder von Matten formbarer Masse aus Spänen und Bindemittel. Das dazu notwendige Werkzeug besteht aus einer Ober- und einer Unterhälfte, die parallel orientierte und mit Abstand zueinander liegende Rillen aufweisen, die im Querschnitt die Form von Halbstäben aufweisen. Im Querschnitt rechteckiges Vollholz, an den Orten der späteren Verbindungselemente genutetes Vollholz oder eine Matte formbarer Masse aus Spänen und Bindemittel wird unter hohem Druck (> 10 N/mm²), ggf bei Hitze (> 100 °C) verdichtet und geformt und wenn nicht vorher schon geschehen, dann nach der Verdichtung erhitzt und anschließend abgekühlt, wie es aus der WO9420273 A bekannt ist. Die Formgebung der Nagelstreifen bestehend aus mit Stegen verbundenen Nägeln kann durch Stanzen im selben Werkzeug, das dann die dafür notwendigen Ausnehmungen aufweist oder in einem separaten Werkzeug durchgeführt werden. Je nach Steifigkeit der Verbindungsmittel zwischen den Nägeln sind die Nagelstreifen in sich steif, so dass der ganze Nagelstreifen angehoben wird, wenn ein Nagel am Ende eines auf einer Unterlage liegenden Nagelstreifens angehoben wird, oder die Nagelstreifen sind flexibel und lassen sich z.B. zu einer Rolle aufrollen. Bei flexiblen Verbindungsmitteln werden nicht der ganze auf einer Unterlage liegende Nagelstreifen, sondern nur die sich in unmittelbarer Nähe des angehoben Nagels befindlichen Nachbarnägel angehoben.

### Versuche

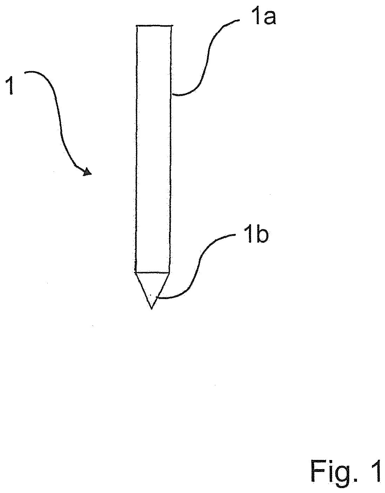

1. Aus Santospalisander (Machaerium scleroxylon), Dichte 0,95 g/cm³ wurden Brettchen 70 cm Länge, 57 mm Breite und 4,5 mm Dicke hergestellt. Die Brettchen wurden mittels doppelseitiger Nutenfräse in Rundstäbe von 3,8 mm Durchmesser gefräst. Die Stäbe wurden auf 50 mm abgelängt und einseitig rund angespitzt, wobei das Anspitzen mit einem Bleistiftspitzer oder alternativ mit Schleifpapier erfolgte. Der so erzeugte Nagel wurde so in einen Druckluftnagler eingelegt und mittels eines kleinen Klebestreifens fixiert, dass der Nagelkopf direkt am Schlagbolzen des Naglers anliegt. Der Nagel wurde mit dem Druckluftnagler bei 6 bar Druck in Fichtenholz geschossen und dabei vollständig im Holz versenkt. Nach Aufschneiden der genagelten Probe an einer Bandsäge, wobei der Nagel in der Längsachse aufgeschnitten wurde, wurde festgestellt, dass der Nagel seine Form beibehalten hat und nicht zersplittert war. Die Kontaktfläche zwischen Nagel und umgebenden Fichtenholz war dunkel verfärbt, was auf thermische Veränderung des Holzes, die durch Reibungswärme verursacht wird, schließen lässt. Bei einer Erhitzung des Holzes auf Temperaturen, die zu einer Verfärbung führen (> 100 °C) wird Lignin erweicht und damit die Voraussetzung für ein Verschweißen beider Kontaktflächen geschaffen.
2. Zwei Lagen Schälfurniere aus Buchenholz, Dicke 3,7 mm, wurden in einer Heizpresse über 300 s bei 200 ° C auf eine Dicke von 4,6 mm miteinander verleimt und verpresst. Nach dem Pressen betrug die Dichte 0,99 g/cm³. Aus diesem Material wurden, wie in Versuch 1, Holznägel hergestellt und in Fichtenholz geschossen. Das Ergebnis entspricht Versuch 1.
3. Fünf Lagen Schälfurnier aus Kiefernholz, Dicke 1,5 mm, wurden in einer Heizpresse über 300 s bei 200 °C auf eine Dicke von 4,6 mm verleimt und verpresst. Die Dichte betrug 0,82 g/cm³. Aus diesem Material wurden, wie in Versuch 1, Holznägel hergestellt und in Fichtenholz geschossen. Das Ergebnis entspricht Versuch 1.
4. Streifen von 57 mm Breite und 4,5 mm Dicke aus Santospalisander, verdichtetem Buchenholz (Versuch 2) werden mittels Laserschneidtechnik zu quadratischen Nägeln mit einer Kantenlänge von 4,5 mm, einer Länge von 70 mm und einer Meißelspitze, deren Länge 9 mm (s. Fig. 1) beträgt, geschnitten. Die Meißelspitze wird mittels Schleifpapier zu einer Pyramidenspitze nachgeformt. Die Nägel wurden wie in Versuch 1 getestet und das gleiche Ergebnis wurde erhalten.
5. Ein kommerzieller Riffeldübel aus Buche, Durchmesser 6 mm, Länge 50 mm wurde rund angespitzt und konnte ohne Splittern in Fichte eingeschossen werden. Das Ergebnis entspricht Versuch 1.
6. CoBAM wurde auf 4,5 mm Dicke gehobelt und mittels Kreissäge zu 4,5 mm breiten Streifen geschnitten, die auf 70 mm abgelängt und einseitig mit einer Pyramidenspitze angespitzt wurden. Die Nägel konnten mit gleichem Resultat wie in den Versuchen 1 bis 5 verarbeitet werden.
7. Holznägel aus Machaerium scleroxylon, die nach den Versuchen 1 und 4 hergestellt wurden, wurden auf Ausziehfestigkeit geprüft. Rundgefräste Nägel mit einem Durchmesser von 3,8 mm und lasergeschnittene Nägel mit einem quadratischen Querschnitt von 4,5 mm Kantenlänge, beide mit einer Nagellänge von 60 mm wurden mittels Druckluftnagler in Fichtenholz geschossen. Beide Nageltypen wurden entweder wie beschrieben oder zusätzlich mit einer Beschichtung versehen, verarbeitet. Bei der Beschichtung handelt es sich um eine füllkörperhaltige Polymerbeschichtung gemäß EP2540781. Die Ausziehwerte sind in Tabelle 1 dargestellt.

**Tabelle 1**

| Ausziehwerte von in Fichtenholz eingeschossenen Holznägeln (aus Machaerium scleroxylon) mit rundem und quadratischem Querschnitt, mit und ohne füllkörperhaltiger Polymerbeschichtung. | |
|---|---|
| | Ausziehkraft [kp] |
| Rundstabnagel ohne Beschichtung | 85,4 |
| Rundstabnagel mit Beschichtung | 100,8 |
| Quadratstabnagel ohne Beschichtung | 118,7 |
| Quadratstabnagel mit Beschichtung | 94,2 |
| Referenznagel Metall | 92,0 |

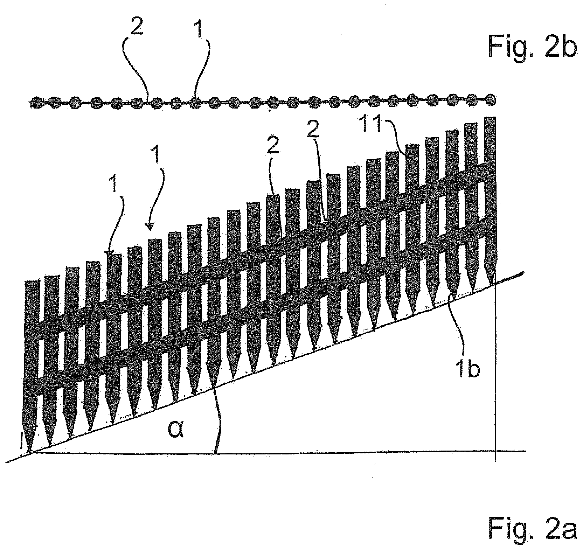

8. Beidseitig geriffelte Riffeldielen mit 4,5 mm Dicke, bestehend aus 24 parallelen Halbstäben und 23 Verbindungsstegen mit 1 mm Dicke wurden aus Vollmaterial (Santospalisander, Kunstharzpressholz) durch Fräsen hergestellt. Die Riffeldielen wurden mittels Kreissäge in einem Winkel von 160 ° zu Streifen von 60 mm Länge (Länge bezieht sich auf die Achsenorientierung der Riffeln) geschnitten. Einseitig wurden die Riffeldielenstreifen an einer Bandschleifmaschine zu einer Meißelspitze angespitzt. Mittels Bohrmaschine, Stichsäge und Bandsäge wurden Ausnehmungen in die Verbindungselemente eingebracht (s. Figur 2). Die Nagelköpfe wurden durch zur Riffelachse senkrecht angeordnete Schnitte ausgebildet. Die Spitzen wurden im gleichen Winkel, den die Meißelspitzen aufweisen durch um 90 ° zur Meißelspitze versetzte Schnitte zu Pyramidenspitzen geformt. Die Nagelstreifen wurden in einen Magazinhalter eines Druckluftnaglers eingelegt. Mit dem Druckluftnagler wurden Nägel einzeln in Fichtenholz eingeschossen. Das Nagelresultat entspricht Versuch 1.
9. Kommerziell erhältliche Riffeldielen aus CoBAM mit einseitiger Riffelung aus Halbrundstäben mit einem Durchmesser von 5 mm werden an einer Säge so aufgetrennt, dass Halbstäbe mit einer Basis von 4,5 mm Breite entstehen. Die Halbstäbe werden auf 60 mm abgelängt. Jeweils zwei Halbstäbe werden gemeinsam einseitig angespitzt und nach Reihenfolge geordnet auf zwei Schablonen verteilt, die eine parallele und treppenförmige Anordnung mit einem Steigungswinkel α von 20° vorgeben. Eine Schar Halbnägel in einer Schablone wird mit Leim bestrichen. Zwei Streifen Papier werden als Verbindungsmittel quer über die Schar Halbnägel gelegt. Die Oberseiten der Papierstreifen werden jeweils auf Höhe der Halbnägel mit Leim bestrichen. Die zweite Schar Halbnägel, jeweils ausgerichtet an dem anderen Halbnagel, mit dem ein jeder Halbnagel angespitzt wurde, wird auf die erste Schar Halbnägel gelegt und mittels der zweiten Schablone fixiert. Beide Schablonen werden miteinander unter Druck verpresst, wobei die Halbnägel zu mit Verbindungsstreifen verbundenen Vollnägeln verleimt werden. Nach dem Aushärten des Leims, wird der Nagelstreifen den Schablonen entnommen und wie in Versuch 8 getestet, wobei sich das gleiche Ergebnis zeigt.
10.Zur Bestimmung des Quelldrucks wurden Probekörper aus Holz der Abmessungen von 10 x 10 x 10 mm bei 210 °C über 4 Minuten mit einem Druck von 20 N/mm² in einer Presse in radialer Wachstumsringausrichtung verdichtet. Fichte wurde auf 3,15 mm, Kiefer auf 36,7 mm und Buche auf 4,58 mm, das entspricht jeweils einer Dichte von ca. 1,4 g/cm³ verdichtet. Die verdichteten Proben wurden in eine Druckmesseinrichtung eingespannt und ca. 100% gesättigter Luftfeuchtigkeit ausgesetzt. Die darrtrockenen Proben haben Feuchtigkeit aufgenommen und dabei innerhalb von 30 h einen Quelldruck aufgebaut, der bei Fichte 8,4 N/mm², bei Kiefer 10,7 und bei Buche 8,2 N/mm² beträgt.

Nachfolgend wird ein Ausführungsbeispiel der vorliegenden Erfindung unter Bezugnahme auf die beiliegenden Zeichnungen beschrieben. In der Zeichnung zeigt
- Figur 1: einen Nagel eines Nagelstreifens gemäß der vorliegenden Erfindung in Vorderansicht,
- Figur 2a: einen Nagelstreifen gemäß der vorliegenden Erfindung in Vorderansicht,
- Figur 2b: den Nagelstreifen aus Figur 2a in Draufsicht,
- Figur 3: in schematischer Darstellung eine Pressvorrichtung zur Herstellung eines Nagelstreifens mit vier Nägeln in geöffnetem Zustand,
- Figur 4: die Pressvorrichtung aus Figur 3 in geschlossenem Zustand, und
- Figur 5: ein Diagramm, in dem die Ergebnisse einer Versuchsreihe zusammengefasst sind.

In Figur 1 ist schematisch ein Nagel für einen Nagelstreifen gemäß der vorliegenden Erfindung dargestellt. Der Nagel 1 besitzt einen Nagelschaft 1a, dessen unteres Ende als eine Nagelspitze 1b mit einem kreisrunden Querschnitt, d.h. mit eine kegelförmige Rundspitze ausgebildet ist. An dem oberen Endbereich ist der Nagelschaft 1a senkrecht zur Nagellängsachse abgeschnitten. Alternativ kann am oberen Ende auch ein Nagelkopf vorgesehen sein, der dann bevorzugt als halblinsenförmige Kalotte ausgeführt ist.

In den Figuren 2a und 2b ist ein Nagelstreifen gemäß der vorliegenden Erfindung dargestellt. Dieser besteht aus einer Vielzahl von parallel angeordneten Nägeln gemäß der Figur 1, welche miteinander durch Verbindungsmittel hier in der Form von Verbindungsstegen 2 miteinander verbunden sind. Die Verbindungsstege sind so ausgestaltet, dass sie beim Herausschießen eines Nagels aus einem Nagelsetzgerät automatisch durchtrennt werden. In der dargestellten Ausführungsform liegen die Spitzen der parallel angeordneten Nägel auf einer Graden, die gegenüber der horizontalen Ebene um einen Winkel α, d.h. gegenüber den Nagellängsachsen um einen Winkel 90 ° minus α geneigt ist. Alternativ können die Nägel aber auch auf einer Graden, die rechtwinklig zur Nagellängsachse ausgerichtet ist, liegen.

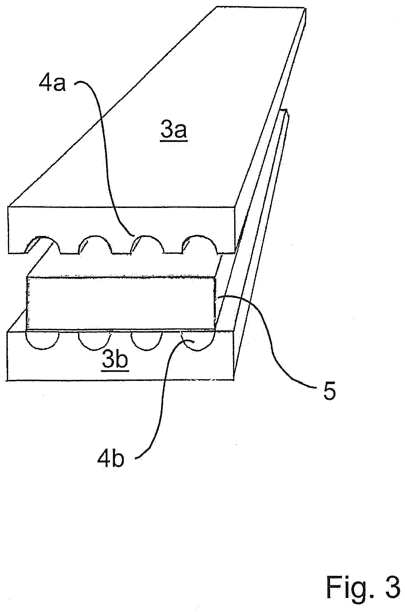

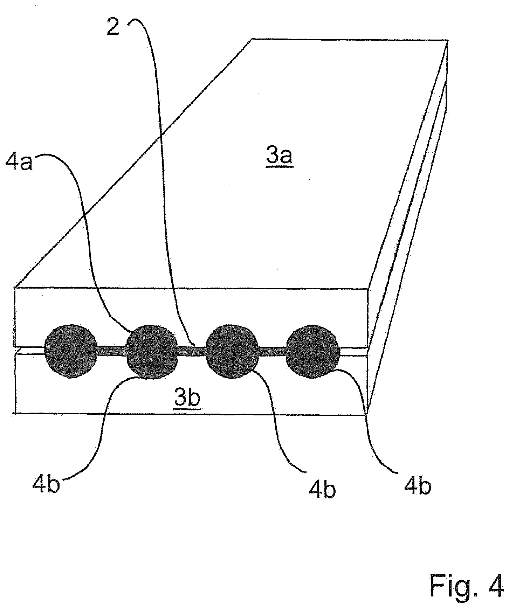

Ein solcher Nagelstreifen mit einer Vielzahl von parallel ausgerichteten Nägeln, die miteinander durch Verbindungsstege 2 verbunden sind, können durch Stanzformpressen aus verdichtetem Vollholz oder einer Matte formbarer Masse aus Spänen und Bindemittel hergestellt werden. Das hierzu notwendige Presswerkzeug besteht, wie die Figuren 3 und 4 erkennen lassen, aus einer oberen Werkzeughälfte 3a und einer unteren Werkzeughälfte 3b, die parallel orientierte und mit Abstand zueinander liegende Rillen 4a, 4b aufweisen, die im Querschnitt die Form von Halbstäben besitzen. Ein im Querschnitt rechteckiges Vollholz 5, an den Orten der späteren Verbindungselemente genutetes Vollholz oder eine Matte formbarer Masse aus Spänen und Bindemittel wird unter hohem Druck und ggf. bei Hitze durch Zusammenfahren der oberen und unteren Werkzeughälften 3a, 3b zusammengepresst, so dass die in Figur 4 dargestellte Anordnung mit hier vier Nägeln, die durch insgesamt drei Verbindungsstege 2 miteinander verbunden sind, erhalten wird.

## Patentansprüche

1. Nagelstreifen für ein Nagelsetzgerät mit mehreren miteinander verbundenen Nägeln (1) zum Verbinden von wenigstens zwei Bauteilen, die jeweils einen Nagelschaft (1a) und eine daran endseitig vorgesehene Nagelspitze (1b) aufweisen, wobei die Nägel (1) aus Holz und/oder Holzwerkstoffen und/oder Bambus oder Palmengewebe enthaltenden Werkstoffen mit einer Dichte größer 0,65 g/cm³ bestehen und mit durchtrennbaren Verbindungsmitteln (2) verbunden sind, die beim Nagelsetzen automatisch abgeschert werden, und wobei das Verhältnis der Länge der Nagelspitze (1b) zur kleinsten Dicke des Nagelschafts (1a) zwischen 1,5 und 3, insbesondere zwischen 1,5 und 2,5 und bevorzugt zwischen 1,8 und 2,1 liegt, **dadurch gekennzeichnet, dass** die Nagelspitze (1b) als kegelförmige Rundspitze ausgebildet ist.

2. Nagelstreifen nach Anspruch 1, **dadurch gekennzeichnet, dass** das Material, aus welchem die Nägel (1) bestehen, eine Dichte größer 0,85 g/cm³ und bevorzugt eine Dichte größer 1,0 g/cm³ aufweist.

3. Nagelstreifen nach einem der vorherigen Ansprüche, **dadurch gekennzeichnet, dass** die Nägel (1) des Nagelstreifens aus verdichtetem Material bestehen und einen Quelldruck von 0,5 N/mm², bevorzugt von 1 N/mm² und besonders bevorzugt von 2 N/mm² entwickeln.

4. Nagelstreifen nach einem der vorherigen Ansprüche, **dadurch gekennzeichnet, dass** die Nägel (1) aus einem solchen Material bestehen, dass sie keine Verfärbungen in Bauteilen erzeugen und/oder dass die Nägel (1) elektromagnetisch verträglich sind.

5. Nagelstreifen nach einem der vorherigen Ansprüche, **dadurch gekennzeichnet, dass** die Nägel (1) und Verbindungsmittel (2) aus dem gleichen Material bestehen.

6. Nagelstreifen nach einem der Ansprüche 1 bis 4, **dadurch gekennzeichnet, dass** die Nägel (1) und Verbindungsmittel (2) aus verschiedenen Materialien bestehen.

7. Nagelstreifen nach Anspruch 6, **dadurch gekennzeichnet, dass** die Verbindungsmittel (2) in Form eines oder mehrerer abscherbarer Streifen oder Fäden, insbesondere aus Papier, Kunststofffolie oder Kunststoffschmelzestreifen, die sich quer über die einzelnen Nägel (1) legen und die Abstände zwischen den Nägeln (1) überbrücken, ausgeführt sind.

8. Nagelstreifen nach Anspruch 7, **dadurch gekennzeichnet, dass** die Streifen oder Fäden an jedem einzelnen Nagel (1) z.B. mit Klebstoff oder durch Anschmelzen befestigt sind, oder dass die Verbindungsmittel (2) z.B. aus Hartweizengries durch Bohrungen oder Schlitze in den Nägeln (1) hindurchgeführt und darin insbesondere durch Klebstoff fixiert sind.

9. Nagelstreifen nach einem der vorherigen Ansprüche, **dadurch gekennzeichnet, dass** die Nagelschäfte (1a) einen runden oder ovalen Querschnitt besitzen.

10. Nagelstreifen nach einem der Ansprüche 1 bis 8, **dadurch gekennzeichnet, dass** die Nagelschäfte (1a) einen mehreckigen Querschnitt besitzen, wobei insbesondere das Verhältnis der axialen Länge zur kleinsten Schaftdicke zwischen 4 und 25, bevorzugt zwischen 9 und 20 und insbesondere bevorzugt zwischen 12 und 16 liegt.

11. Nagelstreifen nach Anspruch 9 oder 10, **dadurch gekennzeichnet, dass** der Durchmesser bzw. die kleinste Schaftdicke der Nägel (1) im Bereich von 2 mm bis 6 mm, insbesondere 3,5 mm bis 6 mm und bevorzugt 4 mm bis 5 mm beträgt.

12. Nagelstreifen nach einem der vorherigen Ansprüche, **dadurch gekennzeichnet, dass** die Nägel an dem der Nagelspitze (1b) gegenüberliegenden Endbereich des Nagelschafts (1a) einen Nagelkopf aufweisen, der als halblinsenförmige Kalotte ausgeführt ist, wobei der Nagelkopf radial bezüglich der Schaftachse über den Nagelschaft (1a) übersteht, oder dass die Nägelschäfte (1a) an ihrem der Nagelspritze (1b) gegenüberliegenden Endbereich unter einem Winkel von 90° zur Schaftachse abgeschnitten sind.

13. Verfahren zur Herstellung eines Nagelstreifens für ein Nagelsetzgerät nach einem der Ansprüche 1 bis 12, **dadurch gekennzeichnet, dass** die Nägel (1) mit spanabhebenden Werkzeugen durch Stanzen, Schneiden mit elektromagnetischen Wellen, insbesondere durch Laserschneiden, oder durch Strahlschneiden, insbesondere mittels Wasserstrahl oder partikelgefülltem Gasstrahl, bevorzugt durch Sandstrahlen oder durch eine Kombination solcher Verfahren hergestellt werden, und/oder dass die Nagelstreifen durch Formpressen einer verformbaren Masse aus Holz und/oder Holzwerkstoffen, die mit duroplastischen oder thermoplastischen Harzen umgeben ist, hergestellt werden, wobei insbesondere separat hergestellte Nägel (1) nachträglich mit den durchtrennbaren Verbindungsmitteln verbunden werden.

14. Verfahren zum Verbinden von wenigstens zwei Bauteilen aus Holz, **dadurch gekennzeichnet, dass** die Bauteile unter Verwendung eines Nagelstreifens nach einem der Ansprüche 1 bis 13 und eines Nagelsetzgerätes miteinander verbunden werden und die einzelnen Nägel (1) mittels des Nagelsetzgerätes in die zu verbindenden Bauteile in einem einzigen Zug mit einer Geschwindigkeit von wenigstens 20 m/s insbesondere mindestens 25 m/s und bevorzugt mehr als 30 m/s eingeschossen werden.

## Claims

1. Nail strip for a nail setting tool having a plurality of nails (1) connected to one another for connecting at least two components, the nails having a nail shank (1a) and a nail tip (1b) provided thereon at the end, the nails (1) being made of materials containing wood and/or wood-based materials and/or bamboo or palm fabric with a density greater than 0,65 g/cm³ and being connected by detachable connecting means (2) which are automatically sheared off when the nail is set, and the ratio of the length of the nail tip (1b) to the smallest thickness of the nail shaft (1a) being between 1,5 and 3, in particular between 1,5 and 2,5 and preferably between 1,8 and 2,1, **characterized in that** the nail tip (1b) is formed as a conical round tip.

2. Nail strip according to claim 1, **characterized in that** the material of which the nails (1) are made has a density greater than 0.85 g/cm³ and preferably a density greater than 1.0 g/cm³.

3. Nail strip according to one of the previous claims, **characterized in that** the nails (1) of the nail strip consist of compacted material and process a swelling pressure of 0.5 N/mm², preferably of 1 N/mm² and in particular preferably of 2 N/mm².

4. Nail strip according to one of the previous claims, **characterized in that** the nails (1) are made of such a material that they do not cause discoloration in components and/or that the nails (1) are electromagnetically compatible.

5. Nail strip according to one of the previous claims, **characterized in that** the nails (1) and the connecting means (2) are made of the same material.

6. Nail strip according to one of claims 1 to 4, **characterized in that** the nails (1) and the connecting means (2) are made of different materials.

7. Nail strip according to claim 6, **characterized in that** the connecting means (2) are configured in the form of one or more shearable strips or threads, in particular of paper, plastic film or plastic melt strips, which lie transversely to the individual nails (1) and bridge the distances between the nails (1).

8. Nail strip according to claim 7, **characterized in that** the strips or threads are fixed to each individual nail (1), e.g. by adhesive or by melting on, or that the connecting means (2), e.g. of durum wheat semolina, are passed through holes or slots in the nails (1) and are fixed therein, in particular by adhesive.

9. Nail strip according to one of the previous claims, **characterized in that** the nail shanks (1a) have a round or oval cross-section.

10. Nail strip according to one of claims 1 to 8, **characterized in that** the nail shanks (1a) have a polygonal cross-section, in particular the ratio of the axial length to the smallest shank thickness being between 4 and 25, preferably between 9 and 20 and in particular preferably between 12 and 16.

11. Nail strip according to claim 9 or 10, **characterized in that** the diameter or the smallest shaft thickness of the nails (1) is in the range from 2 mm to 6 mm, in particular 3.5 mm to 6 mm and preferably 4 mm to 5 mm.

12. Nail strip according to one of the previous claims, **characterized in that** the nails at the end region of the nail shank (1a) opposite the nail tip (1b) have a nail head which is designed as a semi-lens-shaped dome, wherein the nail head projects radially relative to the shaft axis over the nail shaft (1a), or that the nail shafts (1a) are cut off at their end region opposite the nail tip (1b) at an angle of 90° to the shaft axis.

13. Method for producing a nail strip for a nail setting tool according to one of claims 1 to 12, **characterized in that** the nails (1) are fabricated with cutting tools by punching, cutting with electromagnetic waves, in particular by laser cutting, or by jet cutting, in particular by means of water jet or particle-filled gas jet, preferably by sandblasting or by a combination of such processes, and/or that the nail strips are produced by compression moulding of a deformable mass of wood and/or wood materials surrounded by thermosetting or thermoplastic resins, in particular separately produced nails (1) being subsequently bonded to the detachable connecting means.

14. Method for joining at least two wooden components, **characterized in that** the components are joined together using a nail strip according to one of claims 1 to 13 and a nail setting tool, and the individual nails (1) are inserted into the components to be joined in a single pull by means of the nail setting tool at a speed of at least 20 m/s, in particular at least 25 m/s and preferably more than 30 m/s.

## Revendications

1. Bande de clous pour un appareil d' enfoncement des clous ayant une pluralité de clous (1) reliés entre eux pour relier au moins deux composants, les cloues présentant chacun une tige de clou (1a) et une pointe de clou (1b) prévue à l'extrémité, les clous (1) étant faits de matériaux contenant du bois et/ou des matériaux à base de bois et/ou du bambou ou du tissu de palmier avec une densité supérieure à 0,65 g/cm³ et étant reliés par des moyens de liaison séparables (2) qui sont automatiquement cisaillés lorsque le clou est enfoncé, et le rapport de la longueur de l'extrémité du clou (1b) à la plus petite épaisseur de la tige du clou (1a) étant compris entre 1,5 et 3, en particulier entre 1,5 et 2,5 et de préférence entre 1,8 et 2,1, **caractérisé en ce que** l'extrémité du clou (1b) est réalisée sous la forme d'une pointe ronde conique.

2. Bande de clous selon la revendication 1, **caractérisées en ce que** le matériau dont les clous (1) sont faits a une densité supérieure à 0,85 g/cm³ et de préférence une densité supérieure à 1,0 g/cm³.

3. Bande de clous selon l'une des revendications précédentes, **caractérisée en ce que** les clous (1) de la bande de clou sont constitués d'un matériau compacté et développent une pression de gonflement de 0,5 N/mm², de préférence de 1 N/mm² et en particulier de préférence de 2 N/mm².

4. Bande de clous selon l'une des revendications précédentes, **caractérisées en ce que** les clous (1) sont constitués d'un matériau tel qu'ils ne provoquent pas de décoloration dans les composants et/ou que les clous (1) sont compatibles électromagnétiquement.

5. Bande de clous selon l'une des revendications précédentes, **caractérisées en ce que** les clous (1) et les moyens de liaison (2) sont constitués du même matériau.

6. Bande de clous selon l'une des revendications 1 à 4, **caractérisées en ce que** les clous (1) et les moyens de liaison (2) sont constitués des matériaux différents.

7. Bande de clous selon la revendication 6, **caractérisées en ce que** les moyens de liaison (2) se présentent sous la forme d'une ou plusieurs bandes ou fils cisaillables, en particulier de papier, de film plastique ou de bandes fondues en matière plastique, qui se trouvent sur les clous individuels (1) et comblent les distances entre les clous (1).

8. Bande de clous selon la revendication 7, **caractérisées en ce que** les bandes ou fils sont fixés à chaque clou individuel (1), par exemple par colle ou par fusion, ou que les moyens de liaison (2), par exemple en semoule, passent à travers des trous ou des fentes dans les clous (1) et y sont fixés, en particulier par colle.

9. Bandes de clou selon l'une des revendications précédentes, **caractérisées en ce que** les tiges de clous (1a) présentent une section transversale ronde ou ovale.

10. Bande de clous selon l'une des revendications 1 à 8, **caractérisées en ce que** les tiges de clous (1a) présentent une section transversale polygonale, en particulier le rapport de la longueur axiale à la plus petite épaisseur de tige étant compris entre 4 et 25, de préférence entre 9 et 20 et en particulier de préférence entre 12 et 16.

11. Bande de clous selon la revendication 9 ou 10, **caractérisées en ce que** le diamètre ou la plus petite épaisseur de la tige des clous (1) se situe dans le domaine de 2 mm à 6 mm, en particulier de 3,5 mm à 6 mm et de préférence de 4 mm à 5 mm.

12. Bande de clous selon l'une des revendications précédentes, **caractérisée en ce que** les clous dans la région d'extrémité de la tige de clou (1a) opposée à la pointe de clou (1b) ont une tête de clou qui est conçue sous la forme d'un dôme en forme de demi-lentille, la tête de clou faisant saillie radialement à la tige de clou par rapport à l'axe de la tige, ou que les tiges de clou (1a) sont coupées dans leur région d'extrémité opposée à la pointe de clou (1b) selon un angle de 90° par rapport à l'axe de la tige.

13. Procédé de fabrication d'une bande de clous pour un appareil d' enfoncement des clous selon l'une des revendications 1 à 12, **caractérisé en ce que** les clous (1) sont fabriqués en utilisant des outils de coupe par poinçonnage, découpage par ondes électromagnétiques, en particulier par découpage au laser, ou par découpe au jet, en particulier au moyen d'un jet d'eau ou d'un jet de gaz chargé de particules, de préférence par sablage ou par une combinaison de tels procédés, et/ou que les bandes de clous sont fabriquées par moulage par compression d'une masse déformable de bois et/ou de matériaux en bois entourée de résines thermodurcissables ou thermoplastiques, en particulier des clous (1) fabriqués séparément étant ensuite liés aux moyens de liaison séparables.

14. Procédé d'assemblage d'au moins deux composants en bois, **caractérisé en ce que** les composants sont assemblés à l'aide d'une bande de clous selon l'une des revendications 1 à 13 et d'un appareil d' enfoncement des clous et les clous individuels (1) sont insérés dans les composants à assembler en une seule traction au moyen de l'appareil d' enfoncement des clous à une vitesse d'au moins 20 m/s, en particulier d'au moins 25 m/s et de préférence de plus de 30 m/s.
